# EUROPEAN PATENT APPLICATION

(11) **EP 1 569 431 A1**
(43) Date of publication of application: **31.08.2005**
(21) Application number: 05003699.5
(22) Date of filing: 21.02.2005
(51) Int. Cl.: H04M 3/56, H04Q 3/00

(54) **Automatic conferencing service**

(30) Priority: 26.02.2004 US 787328
(71) Applicant: Hewlett-Packard Development Company, L.P., Houston, TX 77070 (US)
(72) Inventor: Henderson, Eric Alan, San Jose California 95129 (US); Sassi, Abdessattar, San Jose California 95123 (US)
(74) Representative: Schoppe, Fritz

(57) **Abstract**

One embodiment disclosed relates to an apparatus for an automatic conferencing service. The apparatus includes at least a service logic execution environment (110) in a telecommunications service network, and an automatic conferencing service (112) running in the service logic execution environment (110). Another embodiment disclosed relates to a method (300) of scheduling an automatic conference. A conference request (304), including conference information specified by a user, is received by an automatic conferencing service (112) running in a service logic execution environment (110) within a telecommunications network. The automatic conferencing service (112) registers the conference and sends notification to attendees of the conference.

## Description

### BACKGROUND OF THE INVENTION

### Field of the Invention

The present invention relates generally to telecommunications.

### Description of the Background Art

A telephone conferencing service may be provided conventionally through "conferencing centers" provided as a service by local and long distance telephone companies. A list of telephone numbers of the conferees and the date and time at which the conference is to begin is supplied to a conference center operator who performs the dialing operations to bring the conferees simultaneously on line to initiate the conference. This technique is limited by the necessity of setting up a relatively inflexible forum in which all participants must be designated in advance, and the inclusion and reliance upon outside telephone company personnel to implement the conference.

A telephone conferencing service may also be provided based on enterprise equipment. Such a service may be implemented on an applications server at the enterprise.

Unfortunately, prior automatic conferencing services can have reliability and availability issues. For example, for an automatic conferencing service running on an application server at an enterprise, when the application server goes down, then the automatic conferencing service in unavailable. It is desirable to increase the robustness and availability of automatic conferencing services.

### SUMMARY

One embodiment of the invention relates to an apparatus for an automatic conferencing service. The apparatus includes at least a service logic execution environment in a telecommunications service network, and an automatic conferencing service running in the service logic execution environment.

Another embodiment of the invention relates to a method of scheduling an automatic conference. A conference request, including conference information specified by a user, is received by an automatic conferencing service running in a service logic execution environment within a telecommunications network. The automatic conferencing service registers the conference and sends notification to attendees of the conference.

### BRIEF DESCRIPTION OF THE DRAWINGS

FIG. 1 is a diagram depicting a system for a high-availability automatic conferencing service in accordance with an embodiment of the invention.
FIG. 2 is a diagram depicting select software components of a high-availability automatic conferencing service in accordance with an embodiment of the invention.
FIG. 3 is a diagram depicting an exemplary process of scheduling an automatic conference in accordance with an embodiment of the invention.
FIG. 4 shows an example user interface to enter information for a new conference.
FIG. 5 shows an example user interface to enter information for each conference attendee.

### DETAILED DESCRIPTION

### I. SYSTEM

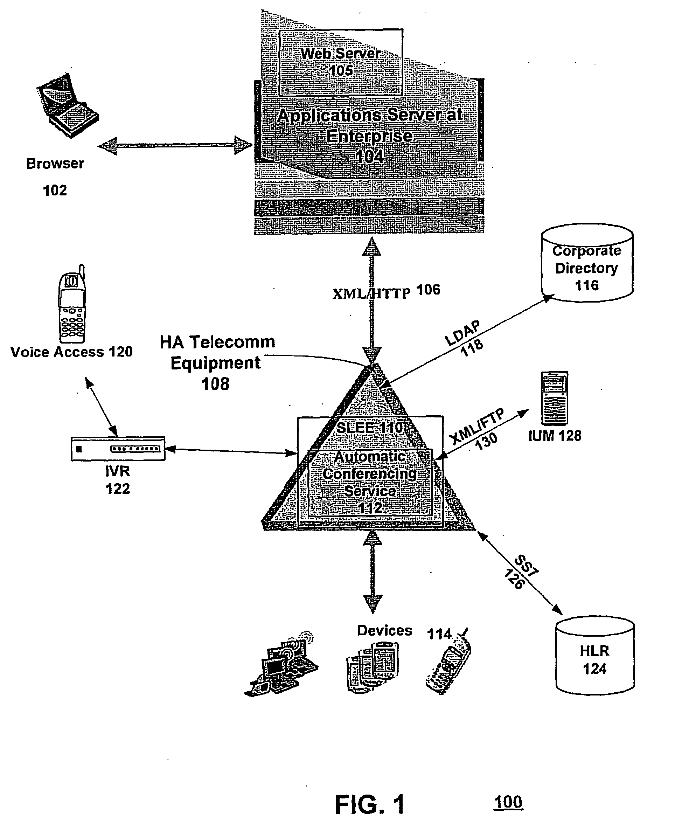

FIG. 1 is a diagram depicting a system **100** for a high-availability (HA) automatic conferencing service in accordance with an embodiment of the invention. To provide a higher-level of availability and to provide more direct access to functions in the telecommunications service network, the system **100** is advantageously configured with an automatic conferencing service **112** running in a service logic execution environment (SLEE) **110** on high-availability (HA) telecommunications equipment **108** within a telecommunications service network. In one implementation, the SLEE **110** may comprise an OpenCall Service Controller (OCSC) running on an HP-UX operating system.

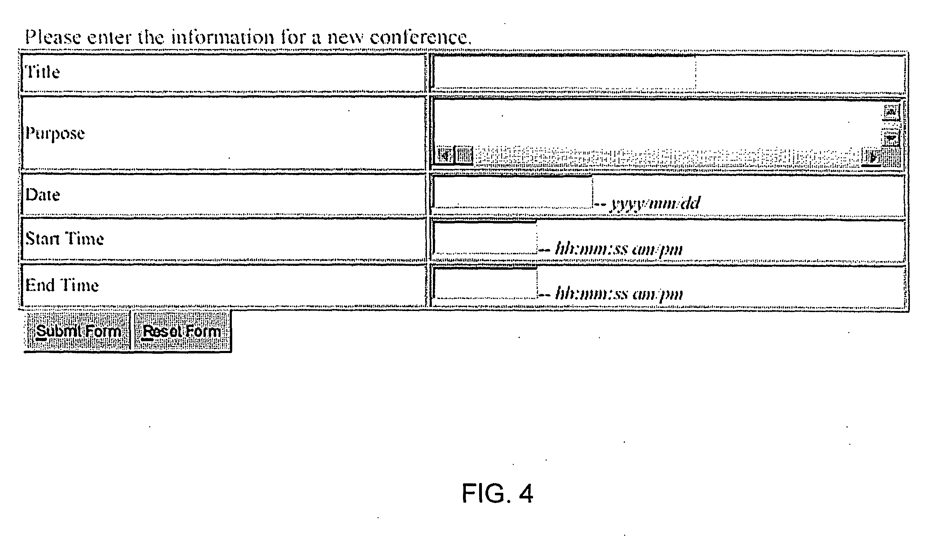

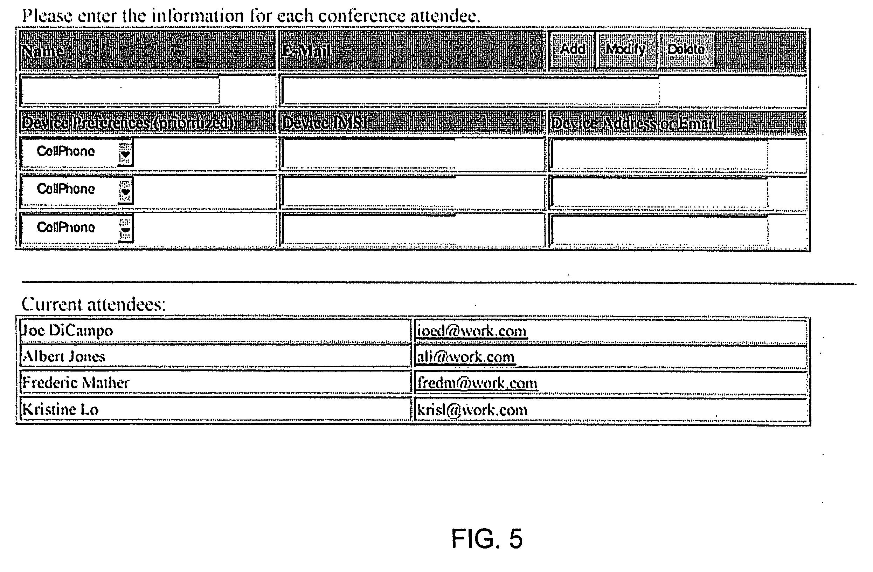

A conference organizer person may use a web browser **102** device to access the automatic conferencing service **112** so as to set up a teleconference. The browser **102** may access the service **112** by way of an automatic conferencing user interface (UI) to a web server **105** running on an applications server **104** of a corporate enterprise. The web server **104** may utilize an extensible markup language/ hyper text transfer protocol (XMUHTTP) interface **106** to communicate with the automatic conferencing service **112**. An example user interface to enter information for a new conference is shown in FIG. 4. An example user interface to enter information for each conference attendee is shown in FIG. 5.

In addition to the web-based access, the system **100** may be configured to include other access channels. For example, the automatic conferencing service **112** may be accessed by a conference organizer using a telephone or other voice access device **120**. The telephone may access the service **112** by way of an interactive voice response (IVR) **122** interface.

The automatic conferencing software **112** may communicate with conference attendees using various types of communication devices **114**. The devices **114** may include telephones, cell phones, wireless personal digital assistants (PDAs), computers with wired or wireless connections, and other communication devices. For example, notifications or reminders to the attendees may be communicated prior to the meeting and during the meeting for absent attendees.

Information regarding attendees, including their preference profiles, may be provided from a corporate or enterprise directory **116**. The directory **116** may be accessed, for example, by way of a Lightweight Directory Access Protocol (LDAP) interface **118**. LDAP is an Internet protocol that programs (for example, email programs) used to look up contact information from a server.

Online status information regarding attendees of a conference may be obtained by the automatic conferencing software **112** using lookups to a home location register (HLR) database **124**. An SS7 (signaling system 7) interface **126** may be used for these HLR communications.

Billing information may be processed by an Internet Usage Manager (IUM) **128**. The billing information may be communicated to the IUM **128** by way of an XMUFTP interface **130**. FTP refers to file transfer protocol.

### II. SOFTWARE MODULES

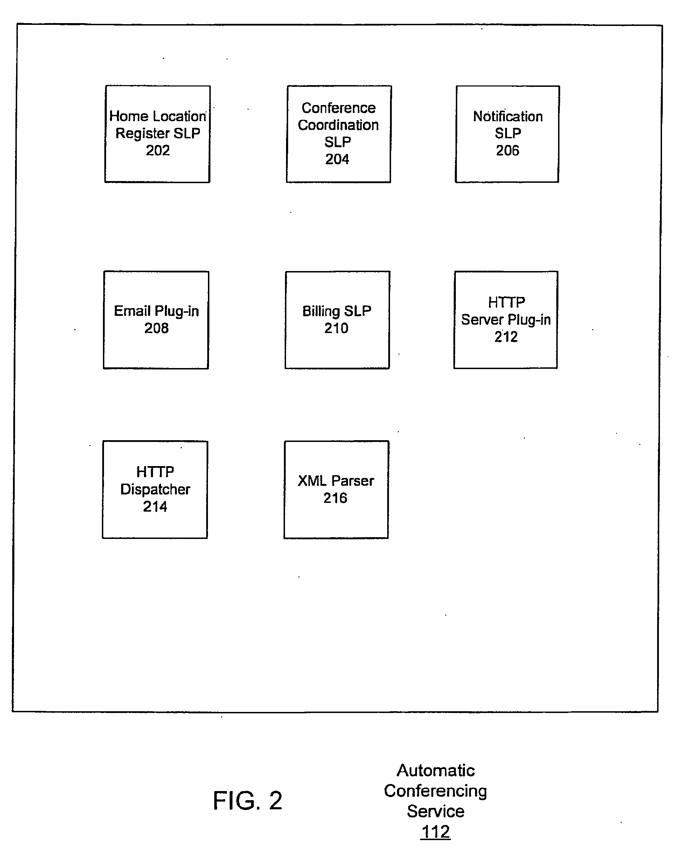

FIG. 2 is a diagram depicting select software components or modules of a high-availability automatic conferencing service **112** in accordance with an embodiment of the invention. The components shown include a Home Location Register (HLR) Database Lookup service logic program (SLP) **202**, a Conference Coordinator SLP (also called the Automatic Conferencing SLP or AC SLP) **204**, a Notification SLP **206**, an Email Plug-in **208**, a Billing SLP **210**, an HTTP Server Plug-in **212**, an HTTP Dispatcher **214**, and an XML Parser **216**. These modules and their operations and interactions are discussed in detail below.

### HTTP SERVER PLUG-IN

In an embodiment, the HTTP Server Plug-in **212** is configured to receive XML messages in HTTP requests via an HTTP connection **106** and forward them via a plug-in channel to the HTTP Dispatcher SLP **214**. The HTTP Server Plug-in **212** is also configured to receive XML response messages back from the HTTP Dispatcher SLP **214** and forwards them back to the same HTTP connection **106**.

The HTTP Server Plug-in **212** may use an embedded web server to listen for HTTP connection requests. If the plug-in **212** accepts a connection, the embedded web server creates an HTTP Client object (HttpClient) to process the requests on that connection. Over time, multiple HTTP connections may access the same conference managed by a particular Conference Coordination SLP 204 instance that is active in the SLEE. For example, a conference may be set up via one HTTP connection, and later triggered via another HTTP connection, and then cancelled via yet another HTTP connection. However, multiple open HTTP connections may be prevented from accessing the same conference simultaneously such that only one HTTP connection can access a particular conference at a time. The HTTP Server Plug-in **212** may also maintain a map of conference IDs and PLUGIN sessions. It can therefore route requests for active conferences via the appropriate PLUGIN session, and route a request for a new conference by creating a new PLUGIN session to the HTTP Dispatcher **214**.

The HTTP Server Plug-in **212** may start up when a UNIX-based service controller platform is started and may remain enabled while the platform is running. (The service controller platform may comprise, for example, an Open Source Service Controller (OCSC) platform or other similar platform.)

In an embodiment, the HTTP Server Plug-in **212** may be configured to perform the following procedural operations.
- After the platform starts, the HTTP Server Plug-in **212** waits for HTTP connection requests.
- If a connection is accepted, the HTTP Server Plug-in **212** creates a HttpClient object, implemented as a Http Plug-in Client object (HttpPiClientlmpl), to process the requests on that connection.
- The HttpClient receives an HTTP request from the Automatic Conferencing GUI containing a "Setup conference" document.
- The HTTP Server Plug-in **212** builds a PLUGIN message with an XML message ID and that contains the "Setup conference" document.
- The HTTP Server Plug-in **212** creates a new PLUGIN session and sends the PLUGIN message to the HTTP Dispatcher.
- The HTTP Server Plug-in **212** maps the client with a conference ID of "Unknown" in its internal client table. This table can be checked to prevent subsequent "Setup conference" requests from being processed simultaneously until the "In progress" response with unique conference ID is received.
- The HTTP Server Plug-in **212** then waits for incoming HTTP messages or PLUGIN messages.
- If the HTTP Server Plug-in **212** receives another "Setup conference" request, it checks the client table to see that there already is an "Unknown" entry and rejects the request with an HTTP error response.
- When The HTTP Server Plug-in **212** receives the "In progress" document from the AC SLP **204** via a PLUGIN session, it parses the document to determine the unique conference ID.
- The HTTP Server Plug-in **212** removes the "Unknown" client mapping from the internal client table and maps that client with the specified conference ID in the client table. The HTTP Server Plug-in **212** also stores the conference ID internally in the HttpPiClientlmpl as the current conference ID.
- The HTTP Server Plug-in **212** maps the PLUGIN session with the specified conference ID and a requestStatus of InProgress in the internal session table.
- The HTTP Server Plug-in **212** forwards the "In progress" document in a HTTP message to the proper HTTP connection.
- The HTTP Server Plug-in **212** again waits for incoming HTTP messages or PLUGIN messages.
- Whenever the HTTP Server Plug-in **212** receives a HTTP message with a conference ID, it looks up the conference ID in the client table. If the ID is in the table, it verifies the current HttpClient, not a different HttpClient, handles the HTTP message. If the ID is not in the table, the HTTP Server Plug-in **212** adds the conference ID and HttpClient to the client table as the current HttpClient for that conference.
- Whenever the HTTP Server Plug-in **212** receives a "Checking online devices" response from the AC SLP **204**, it forwards the response in a HTTP message to the proper HTTP connection.
- When the HTTP Server Plug-in **212** receives a "Notifications sent" response from the AC SLP **204**, it forwards the response to the proper HTTP connection, and sets the requestStatus to Done in the session table.
- If the HTTP Server Plug-in **212** receives an HTTP message with a "Trigger request", it looks up the conference ID in the session table. If its requestStatus is InProgress, it rejects the request with an HTTP error response. If its requestStatus is Done, it changes the requestStatus to InProgress and forwards the "Trigger request" via the proper PLUGIN session.
- If the HTTP Server Plug-in **212** receives an HTTP message with a "Status request", it looks up the conference ID in the session table and forwards the "Trigger request" via the proper PLUGIN session.
- If the HTTP Server Plug-in **212** receives a HTTP message with a "Cancel request", it looks up the conference ID in the session table, and forwards the "Cancel request" via the proper PLUGIN session. It then deletes the conference ID rows from the session and client tables, changes the current conference ID for the HttpPiClientlmpl to "None", and closes the PLUGIN session for that conference.
- If the HTTP Server Plug-in **212** receives a "Conference started" PLUGIN message from the AC SLP **204**, it knows the AC SLP has completed successfully and exited. It also deletes the conference ID rows from the session and client tables, changes the current conference ID for the HttpPiClientImpl to "None", and closes the PLUGIN session for that conference.
- When the AC GUI browser closes the HTTP connection, the HttpClient terminates. The HttpPiClientImpl destructor is called, which removes any entry from the client table for the current conference ID for that client. The conference may still be active in the session table, allowing another HttpClient to access the conference at a later time for a trigger, status, or cancel requests.
Each HttpPiClientImpl stores internally the conference ID it is currently responsible for. The HTTP Server Plug-in **212** may be configured to use an internal session table to map a conference ID to a PLUGIN session. The HTTP Server Plug-in **212** may also be configured to keep track of whether a conference has a request in-progress or done. The HTTP Server Plug-in **212** may further be configured to use an additional internal client table to map a conference ID to the current HttpClient that is processing requests and responses for that conference.

### HTTP DISPATCHER SLP

In accordance with an embodiment, the HTTP Dispatcher SLP **214** may comprise a multi-service SLP and can be used for more than just the Automatic Conferencing Service. The HTTP Dispatcher SLP **214** receives initial request messages coming into the SLEE via the HTTP Server Plug-in **212**. The HTTP Dispatcher SLP **214** determines which SLP is responsible for processing the request and forwards the message. The HTTP Dispatcher SLP **214** only handles the initial request; subsequent requests and responses are handled directly by the responsible SLP.

The HTTP Dispatcher **214** may start-up when, for example, a UNIX-based service controller platform is started and may remain enabled while the platform is running.

In an embodiment, the HTTP Dispatcher SLP **214** may be configured to perform the following procedural operations.
- After the platform starts, the HTTP Dispatcher SLP **214** waits for incoming messages from the PLUGIN channel.
- The service controller platform creates an HTTP Dispatcher SLP **214** instance to handle the first message that arrives on a particular OCSC PLUGIN session.
- The Dispatcher **214** instance receives the incoming message and checks the PLUGIN message ID to determine what type of message it is.
- The Dispatcher **214** instance looks up the message ID in a table in the SLEE database to determine which SLP should process the message.
- If the message has an XML message ID (as defined in the xml.ddl file), the database lookup will determine that the Dispatcher **214** should send the message to the AC SLP **204**.
- The Dispatcher **214** instance creates an AC SLP **204** instance and outputs the PLUGIN message to it.
- The Dispatcher **214** instance terminates. In an implementation, the SLEE database may be used to configure the SLP that processes the incoming PLUGIN message, based on its message ID.

### CONFERENCE COORDINATION SLP

The Conference Coordination or Automatic Conference (AC) SLP 204 performs the coordination and processing needed to provide the automatic conferencing service. The AC SLP **204** receives, processes, and responds to the conference requests, keeping track of the information for all outstanding conferences.

When the HTTP Dispatcher **214** receives a "Setup conference" request, it creates an instance of the AC SLP **204** and forwards the request to be processed. The AC SLP **204** instance terminates after the conference has been executed, or cancelled.

In accordance with this embodiment, there is a one-to-one relationship between each conference and a corresponding AC SLP **204** instance. The number of outstanding conferences is limited by the number of AC SLP 204 instances that can be active simultaneously.

In an alternate embodiment, the one-to-one feature may be changed by providing an additional Conference Dispatcher SLP (not shown). Such a Conference Dispatcher SLP would coordinate the outstanding conferences and the active AC SLP **204** instances, tracking them using the unique conference ID's. A particular AC SLP **204** instance may be configured to do the initial conference setup, then it would terminate. The Conference Dispatcher SLP could create a new AC SLP instance to handle any subsequent conference status, trigger, or cancellation messages.

The AC SLP **204** communicates with other SLPs via SLEE signals containing XML documents. The AC SLP **204** also writes conference information into SLEE database tables that can be read and updated by the other SLPs as appropriate.

The AC SLP **204** also communicates with the HTTP Server Plug-in **212** by sending the same XML documents via an OCSC PLUGIN channel. After receiving the first "Setup conference" XML document from the HTTP Dispatcher, the AC SLP **204** instance communicates directly with the HTTP Server Plug-in **212** from then on. Each conference, with its own unique conference ID, is managed by a separate AC SLP **204** instance. The AC SLP **204** instance communicates with the corresponding AC UI instance via the HTTP Server Plug-in 212 using a dedicated Plug-in session of the PLUGIN channel interface. That PLUGIN session may stay open for the lifetime of the conference.

With the possible Conference Dispatcher enhancement mentioned above, the Conference Dispatcher would also coordinate the correlation of unique conference IDs and PLUGIN sessions. A PLUGIN session would not be required to stay open for the lifetime of the conference, but sessions could be closed as SLP instances terminate, and reopened as needed for subsequent messages.

In an embodiment, the AC SLP **204** may be configured to perform the following procedural operations.
- An AC SLP **204** instance receives a "Setup conference" document from the HTTP Dispatcher **214** via an output PLUGIN message.
- From the PLUGIN message, the AC SLP **204** instance determines the Plug-in session it will use for subsequent communication with AC UI via the HTTP Server Plug-in **212**.
- The AC SLP **204** instance uses the XML Parser **216** SNI to parse the document as appropriate.
- The AC SLP **204** instance generates a unique conference ID.
- The AC SLP **204** instance sends the unique conference ID in a "In progress" response back via the HTTP Server Plug-in **212**. It saves the response as the current XML document for that conference. For persistence, it also stores the conference data in the SLEE database keyed by the conference ID.
- The AC SLP **204** instance sets up a timer so it can be signaled at a configurable interval (default 5 minutes in an embodiment) before the conference is scheduled to start.
- The AC SLP **204** instance creates a Notification SLP instance and signals it with the document to send the appropriate notifications.
- The AC SLP **204** instance then waits for incoming signals.
- When the AC SLP **204** instance receives a "Checking online devices" or "Notifications sent" response from the Notification SLP **206**, it saves that as the current XML document for that conference, saves the conference data in the SLEE database, and sends the response via the HTTP Server Plug-in **212**.
- If the AC SLP **204** instance receives a "Status request" from the HTTP Server Plug-in **212**, it responds with the current XML document.
- If the AC SLP **204** instance receives a "Cancel request" from the HTTP Server Plug-in **212**, it cancels the timer, forwards the request to the Notification SLP **206** if it is active, deletes the conference data from the SLEE database, responds with a "Request cancelled", and exits.
- When the Notification SLP **206** signals the AC SLP **204** instance that the attendees have been notified, the AC SLP **204** instance signals the Billing SLP **210** with the current XML document to generate the appropriate billing records.
- If the AC SLP **204** instance receives a "Trigger notifications" request, it again creates a Notification SLP **206** instance and signals it with the current XML document to again send the appropriate notifications.
- When the timer pops, the AC SLP **204** instance again creates a Notification SLP **206** instance and signals it with the current XML document to again send the appropriate notifications. It then creates a new timer so it can be signaled when the conference is starting.
- When the second timer pops, the AC SLP **204** again creates a Notification SLP **206** instance and signals it with the current XML document to again send the appropriate notifications.
- When the Notification SLP **206** signals the AC SLP **204** that the attendees have been notified that the conference has started, the AC SLP **204** is completed successfully. It sends a "Conference started" message with the conference ID to the HTTP Server Plug-in **212**. It then deletes the conference data from the SLEE database, and exits.
The current conference information may be maintained as an XML document kept in a buffer local to the SLP instance. The current conference information may also be kept in the SLEE database so that it can easily be shared with the Notification SLP **206** and the Billing SLP **210**. The information may be kept in multiple tables.

### XML PARSER

The XML Parser **216** may utilize a service logic execution language (SLEL) interface to provide XML parsing functions to SLP programs. The interface may specify wrapper functions that use an "expat" shared library to perform the actual parsing.

### NOTIFICATION SLP

The Notification SLP **206** sends conference announcement messages to the appropriate devices of the conference attendees.

An AC SLP **204** instance creates a Notification SLP **206** instance when the AC SLP **204** desires that conference announcements be sent out. The Notification SLP **206** instance terminates after it signals the AC SLP **204** that all notifications have been successfully sent.

The Notification SLP **206** communicates with other SLPs via SLEE signals containing XML documents. The Notification SLP **206** also reads conference information from the SLEE database tables created by the AC SLP **204.** In particular, it also reads the device online status that is updated by the HLR SLP **202**.

The Notification SLP **206** also communicates with the Email plug-in **208** with a service controller PLUGIN messages via a service controller PLUGIN channel. The Email plug-in **208** is asynchronous, so it does not respond to the PLUGIN messages and assumes the email messages were sent correctly.

In an embodiment, the Notification SLP **206** instance may be configured to perform the following procedural operations.
- The Notification SLP **206** instance receives a request document from the AC SLP **204** for a current conference request. It saves the request as the current XML document for this conference.
- The Notification SLP **206** instance creates an HLR SLP **202** instance and signals it with the document to check the online status of the attendees.
- The Notification SLP **206** instance then waits for incoming signals.
- If at this time the Notification SLP **206** instance receives a "Cancel request" from the AC SLP **204**, it forwards the request to the HLR SLP **202** if it is active, and exits.
- Whenever the Notification SLP **206** instance receives a "Checking online devices" response from the HLR SLP **202**, it saves that as the current XML document for that conference, and sends the response back to the AC SLP **204**.
- When the Notification SLP **206** instance receives the "Done checking devices" response from the HLR SLP **202**, it saves that as the current XML document for that conference, and starts sending notifications to the subscribers.
- The Notification SLP **206** instance reads the SLEE database as appropriate to get the conference information, subscriber information, and device information. This includes the online device status that was just updated by the HLR SLP **202**.
- The Notification SLP **206** instance processes each subscriber in the subscriber list.
- For each subscriber, the Notification SLP instance searches for the first device **114** (listed in order of preference) that is online.
- If the device **114** is a cell-phone (using SMS), the Notification SLP **206** instance puts together an email body with the conference title, start time, and end time. The conference purpose is not included to keep the SMS message short. It specifies an email address that is the address specified for the device.
- If the device **114** is a laptop or PDA, the Notification SLP **206** instance puts together an email body with the conference title, purpose, start time, and end time. It specifies an email address that is the address specified for the device.
- If the subscriber has no online devices **114**, the Notification SLP **206** instance puts together an email body with the conference title, purpose, start time, and end time. It specifies an email address that is the subscriber's email address.
- The Notification SLP **206** instance puts together a PLUGIN message containing the email message SLEL with the email address, email body, and an email subject of "Conference notification".
- For the first subscriber, the Notification SLP **206** instance creates PLUGIN session to send the PLUGIN message to the Email plug-in **208**. It uses the same PLUGIN session to send PLUGIN messages for each of the subsequent subscribers.
- After all the subscribers have been processed, the Notification SLP **206** instance updates the XML document to have a conference status of "Notifications sent", and sends it as a response to the AC SLP **204**.
- The Notification SLP **206** instance then puts together a PLUGIN message with a message ID of email_finished, and sends the message to the Email plug-in 208. It closes the plug-in session it used with the Email plug-in **208,** and exits.
- Also if the Notification SLP **206** instance receives a "Cancel request" from the AC SLP **204** while sending notifications, it sends the email_finished message to the Email plug-in, **208** closes the plug-in session and exists.
The current conference information may be kept as an XML document in a buffer local to the Notification SLP 206 instance. As appropriate, the Notification SLP 206 can also access the database tables specified above for the AC SLP 204.

### HOME LOCATION REGISTER SLP

The Home Location Register (HLR) SLP **202** provides an HLR database lookup to determine the online status of the devices of attendees. In an implementation, the HLR SLP **202** may be configured to send HLR requests via an HLR Plug-in to a CORBA (Common Object Request Broker Architecture) interface of an HLR database to determine the online status of devices.

The Notification SLP **206** creates a HLR SLP **202** instance when it needs device status information. The HLR SLP **202** instance terminates after it signals the Notification SLP **206** with the "Done checking devices" message.

The HLR SLP **202** communicates with other SLPs via SLEE signals containing XML documents. It also updates the device status in a device table created by the AC SLP **204** in the SLEE database.

In an embodiment, the HLR SLP **202** instance may be configured to perform the following procedural operations.
- The HLR SLP **202** instance receives a request document from the Notification SLP **206** for a current conference request. It saves the request as the current XML document for this conference.
- The HLR SLP **202** instance reads the conference data from the AC SLP **204** database tables as appropriate.
- The HLR SLP **202** instance updates the conference status of the document to be "Checking online devices" and saves the document as the current XML document in the SLP.
- The HLR SLP **202** instance processes each subscriber in the subscriber list.
- For each subscriber, the HLR SLP **202** instance processes each device 114 (listed in order of preference), until it finds a device 114 (if any) that is online.
- For each device, the HLR SLP **202** instance looks up the device **114** IMSI (International Mobile Subscriber Identity) code in the IMSI table in the SLEE database to determine if the device is "Offline" or "Online." If the IMSI code is not found in the SLEE database, the device **114** is specified to be "Offline."
- The HLR SLP **202** instance updates the status of the device **114** in the current XML document and in the device table created by the AC SLP **204** in the SLEE database.
- When the HLR SLP **202** instance finds a subscriber's device **114** that is online, or that none of the subscriber's device **114** are online, it sends the current XML document as a "Checking online devices" response to the Notification SLP **206**.
- After all subscribers have been processed, the HLR SLP **202** instance updates the current XML document to have a conference status of "Done checking devices", sends it as a response to the Notification SLP 206, and exits.
- If the HLR SLP **202** instance receives a "Cancel request" from the Notification SLP **206**, it exits.

The current conference information may comprise a XML document kept in a buffer local to the HLR SLP **202** instance. The HLR SLP **202** can also access the database tables specified above for the AC SLP **204.** The SLEE database may be used to configure the online status of the devices, keyed on the device IMSI number.

### EMAIL PLUG-IN

The Email Plug-in **208** sends an email message with a specified subject and body to specified addresses. The Email Plug-in **208** may beconfigured to be automatically enabled whenever the service controller platform is started. The Email Plug-in **208** may remain enabled and waiting for incoming messages until the service controller platform is shutdown.

The Notification SLP **206** may be configured to communicate with the Email plug-in **208** with service controller PLUGIN messages via a service controller PLUGIN channel. The PLUGIN messages may contain SLEL data. The Email plug-in **208** is asynchronous, so it does not respond to the PLUGIN messages and assumes the email messages were sent correctly.

In an embodiment, the Email Plug-in **208** may be configured to perform the following procedural operations.
- After the platform starts, the Email Plug-in **208** waits for incoming PLUGIN message from the Notification SLP **206**.
- When the Email Plug-in **208** receives a PLUGIN message on a new or existing PLUGIN session, it checks the message ID to ensure it is an email message ID.
- The Email Plug-in **208** forks and executes a separate process to send the email message with the specified email subject and body to the email addresses. This ensures that no actual file system access is done in the plug-in process itself.
- If the PLUGIN message ID is email_finished, then the Email Plug-in **208** knows the Notification SLP **206** has closed the PLUGIN session from the SLP side. The Email Plug-in **208** closes the session from the plug-in side, and waits for additional incoming messages from other SLPs.

### BILLING SLP

The Billing SLP **210** may be configured so as to receive an XML conferencing message from the AC SLP **204.** From that message, the Billing SLP **210** may generate an XML file including appropriate Internet Protocol Detail Records (IPDR) for billing. This file with the IPDR billing records may be detected via an XMUFTP interface **130** and processed by an Internet Usage Manager (IUM) **128**.

### III. EXEMPLARY PROCESS

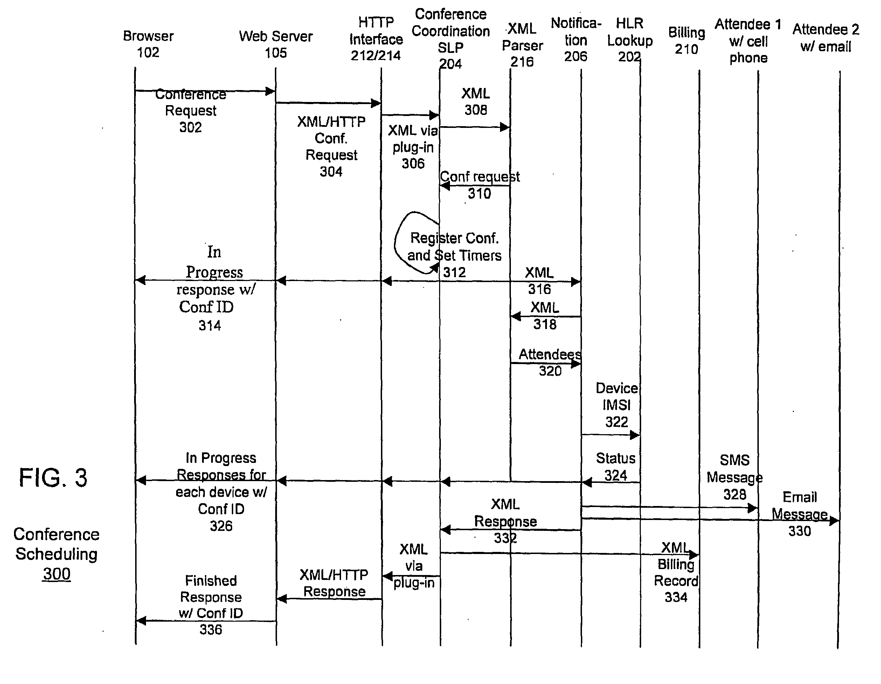

FIG. 3 is a diagram depicting an exemplary process **300** of scheduling an automatic conference in accordance with an embodiment of the invention. The process **300** begins when a conference coordinator person (i.e. a user) utilizes a browser **102** to access a web page from a web server **105**. The web page provides access to the automatic conferencing service. Using the web page mechanism, the coordinator, in step **302**, sends a request to schedule a conference. In an implementation, the coordinator provides the name, purpose, time and duration of the requested conference, the names of conference attendees, and their device profiles. This conference request, in step **304**, is communicated from the web server **105** via the XMUHTTP interface **106** to the pertinent high-availability telecommunications equipment **108**. In addition, authorization of the user may be confirmed. The HTTP Server Plug-in **212** receives the request and, in step **306**, sends the XML message to the HTTP Dispatcher **214**, which provides the XML message to the Conference Coordinator SLP **204**. The Conference Coordination SLP **204**, in step **308**, provides the XML message to the XML Parser **216**. After parsing the message, the XML Parser **216**, in step **310**, returns the conference request information therein to the Conference Coordination SLP **204**.

The Conference Coordination SLP **204**, in step **312**, registers the conference with a unique conference identifier (ID). Pertinent timers for the conference are also set by the Conference Coordination SLP **204**.

A notification is returned, in step **314**, by the Conference Coordination SLP **204** via the web interface to the conference coordinator person that the scheduling is in progress. The notification includes the conference ID assigned to this request.

The Conference Coordination SLP **204** proceeds to coordinate the notification to the conference attendees of the conference information along with the necessary contact information for them to be able to join the conference. This may be accomplished, for example, by the following.

The Conference Coordination SLP **204** may create an instance of the Notification SLP **206** and, in step **316**, signals it with the XML document for that conference. The Notification SLP **206** may extract the attendee information by sending, in step **318**, the XML document to the XML Parser **216** so that the XML Parser **216** can return, in step **320**, the attendee information therein.

The Notification SLP **206** may then create an instance of the HLR SLP **202**. The Notification SLP **206** may provide, in step **322**, the device IMSI data for the attendees to the HLR SLP **202**. The HLR SLP **202** looks up the current online status of the attendees, and returns, in step **324**, the status information to the Notification SLP **206**. The status information is returned from the Notification SLP **206** to the Conference Coordination SLP **204** which may return, in step **326**, another in-progress response ("Checking online devices") including this status information via the web interface to the conference coordinator person.

Based on the status information, the Notification SLP **206** may also be instructed to send appropriate notice messages to the attendees. The notice messages may take the form of, for example, an SMS message that is sent, in step **328**, to an attendee with a cell phone, and an email message that is sent, in step **330**, to another attendee with email.

Thereafter, an XML response indicating that the notices were sent may be returned, in step **332**, from the Notification SLP **206** to the Conference Coordinator SLP **204**. Based upon that, the Conference Coordinator SLP **204** may send, in step **336**, a finished or "Notifications sent" response for that conference ID via the HTTP Interface **212/214**, to the Web Server **105**, to the Browser **102**, and finally to the conference coordinator person. In addition, the Conference Coordinator SLP **204** may signal, in step **334**, the Billing SLP **210** with the current XML document to generate the appropriate billing records.

As mentioned in the above discussion of FIG. 1, FIG. 4 shows an example user interface to enter information for a new conference, and FIG. 5 shows an example user interface to enter information for each conference attendee.

In the above description, numerous specific details are given to provide a thorough understanding of embodiments of the invention. However, the above description of illustrated embodiments of the invention is not intended to be exhaustive or to limit the invention to the precise forms disclosed. One skilled in the relevant art will recognize that the invention can be practiced without one or more of the specific details, or with other methods, components, etc. In other instances, well-known structures or operations are not shown or described in detail to avoid obscuring aspects of the invention. While specific embodiments of, and examples for, the invention are described herein for illustrative purposes, various equivalent modifications are possible within the scope of the invention, as those skilled in the relevant art will recognize.

These modifications can be made to the invention in light of the above detailed description. The terms used in the following claims should not be construed to limit the invention to the specific embodiments disclosed in the specification and the claims. Rather, the scope of the invention is to be determined by the following claims, which are to be construed in accordance with established doctrines of claim interpretation.

## Claims

1. An apparatus for an automatic conferencing service, the apparatus comprising:
a service logic execution environment in a telecommunications service network; and
automatic conferencing service running in the service logic execution environment.

2. The apparatus of claim 1, wherein modules of the automatic conferencing service include a conference coordination service logic program.

3. The apparatus of claim 2, wherein the automatic conferencing service modules further include an HTTP interface.

4. The apparatus of claim 3, wherein the HTTP interface comprises an HTTP server plug-in module and an HTTP dispatcher module.

5. The apparatus of claim 2, wherein the automatic conferencing service modules further include an extensible markup language parser.

6. The apparatus of claim 2, wherein the automatic conferencing service modules further include a notification service logic program.

7. The apparatus of claim 2, wherein the automatic conferencing service modules further include a home location register service logic program.

8. The apparatus of claim 2, wherein the automatic conferencing service modules further include a billing service logic program.
